(19) **Europäisches Patentamt European Patent Office Office européen des brevets**

(11) **EP 4 374 842 B1**

(12) **EUROPEAN PATENT SPECIFICATION**

(45) Date of publication and mention
of the grant of the patent:
**20.08.2025 Bulletin 2025/34**

(21) Application number: **23211722.6**

(22) Date of filing: **23.11.2023**

(51) International Patent Classification (IPC):
***A61H 23/02*** *(2006.01)*

(52) Cooperative Patent Classification (CPC):
**A61H 23/02;** A61H 2023/0209; A61H 2201/0149;
A61H 2201/5002; A61H 2201/5007;
A61H 2201/5048

(54) **VIBRATION DEVICE AND OPERATION METHOD THEREOF**

VIBRATIONSVORRICHTUNG UND BETRIEBSVERFAHREN DAFÜR

DISPOSITIF DE VIBRATION ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.11.2022 TW 111144745**

(43) Date of publication of application:
**29.05.2024 Bulletin 2024/22**

(73) Proprietor: **Cooler Master Technology Inc.**
**Tapei City 114065 (TW)**

(72) Inventors:
• **Lin, Chi-Min**
  **Taipei (TW)**
• **Shiao, Yao**
  **Taipei (TW)**
• **Chen, Chun-Ta**
  **Taipei (TW)**
• **Lee, Shang-Che**
  **Taipei (TW)**
• **Lien, Ming-Wan**
  **Taipei (TW)**

(74) Representative: **Grünecker Patent- und**
**Rechtsanwälte**
**PartG mbB**
**Leopoldstraße 4**
**80802 München (DE)**

(56) References cited:
**EP-A1- 1 350 502      US-A- 5 857 986
US-A- 6 027 463      US-A1- 2013 061 736**

Description

BACKGROUND

1. Technical Field

This disclosure relates to a vibration device according to the preamble of claim 1 , especially a vibration device with a function of vibration parameter adjustment, and an operation method according to the preamble of claim 9.

2. Related Art

Nowadays, there are various types of vibration devices available for users to experience vibration, such as vibrating chair, massage gun, or the likes. Some of these vibration devices may provide a variety of vibrating parameters for the user to choose from, but these vibrating parameters are preset fixed, and cannot satisfy the need for delicate vibrating feel of modern user.

US6027463A describes a music massager system and method according to the preambles of claims 1 and 9. The system comprises vibrating motors, a motor control unit, an audio input unit, and a signal processing unit. The audio input unit receives an audio signal, which is low-pass filtered and amplitude-modulated by the signal processing unit based on the motors' rated revolution. The modulated signal controls the motors via the motor control unit. The system appears to include a setting unit to receive beat instructions with speed and note parameters, enabling the calculation of vibration time to control the motors. The operation methods involve processing audio signals and beat instructions to generate modulated signals and calculate vibration times, ensuring synchronized vibrations with the audio input. This system provides a customizable massaging experience, adapting to various music types and user preferences.

SUMMARY

The present invention is identified in claim 1 and claim 9.

A vibration device of the present disclosure according to an embodiment of the present disclosure includes an audio input unit, a signal processing unit, a motor control unit and at least one vibration motor, wherein the signal processing unit is connected to the audio input unit and the motor control unit, and the at least one vibration motor is connected to the motor control unit. The audio input unit is configured to obtain audio signal. The signal processing unit is configured to perform low-pass filtering on the audio signal to generate a filtered signal, modulate the filtered signal according to the rated revolution of the at least one vibration motor to generate a modulated signal, and control the at least one vibration motor through the motor control unit according to the modulated signal.

A vibration device according to another embodiment of the present disclosure, including a setting unit, a signal processing unit, a motor control unit and at least one vibration motor, wherein the signal processing unit is connected to the setting unit and the motor control unit and the at least one vibration motor is connected to the motor control unit. The setting unit is configured to receive a beat setting instruction, the beat setting instruction includes a speed parameter and a note parameter. The signal processing unit is configured to calculate the vibration time according to the speed parameter and the note parameter, and control the at least one vibration motor through the motor control unit according to the vibration time.

An operation method of a vibration device according to an embodiment of the present disclosure includes: obtaining an audio signal; performing a low-pass filtering on the audio signal to generate a modulated signal; performing a modulation on the at least one vibration motor to generate a modulated signal according to a rated revolution of the at least one vibration motor; and controlling the at least one vibration motor according to the modulated signal.

An operation method of a vibration device according to another embodiment of the present disclosure includes: receiving a beat setting instruction, the beat setting instruction includes a speed parameter and a note parameter; calculating the vibration time according to the speed parameter and the note parameter; and controlling the at least one vibration motor according to the vibration time.

In summary, the vibration device and operation method thereof disclosed by the present application may adjust multiple vibrating parameters of a vibration motor according to an audio signal or outside inputs, to provide users with various vibration experience.

The description of the present disclosure and the description of the embodiments below are used to provide a further explanation of the claims of the present disclosure.

BRIEF DESCRIPTION OF THE DRAWINGS

The present disclosure will become more fully understood from the detailed description given hereinafter he accompanying drawings which are given by way of illustration only and thus are not limitative of the present disclosure and wherein:

Fig. 1 is a functional block diagram illustrating a vibration device according to an embodiment of the present disclosure.
Fig. 2 is a flow chart illustrating an operation method of a vibration device according to an embodiment of the present disclosure.
Fig. 3a to Fig. 3d are schematic diagrams illustrating the signal changes in the process of signal processing of a vibration device according to an embodiment of the present disclosure.

Fig. 4 is a functional block diagram illustrating a vibration device according to another embodiment of the present disclosure.

Fig. 5 is a flow chart illustrating an operation method of a vibration device according to another embodiment of the present disclosure.

Fig. 6 is a flow chart illustrating an operation method of a vibration device according to still another embodiment of the present disclosure.

Fig. 7 is a flow chart illustrating an operation method of a vibration device according to yet another embodiment of the present disclosure.

Fig. 8 is a flow chart illustrating an operation method of a vibration device according to further another embodiment of the present disclosure.

Fig. 9 is a functional block diagram illustrating a vibration device according to another embodiment of the present disclosure.

## DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

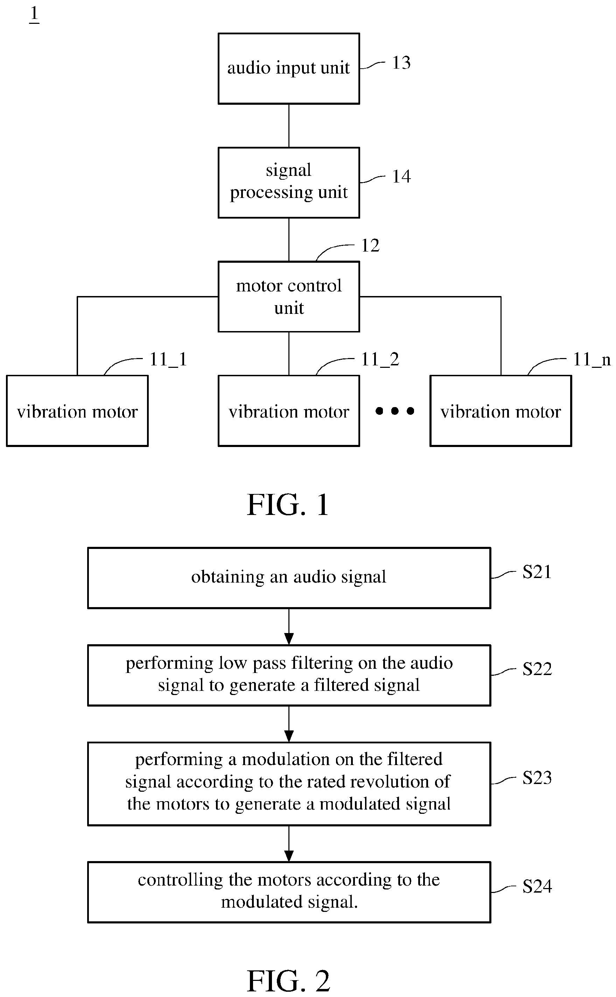

Please refer to Fig. 1 which is a functional block diagram illustrating a vibration device according to an embodiment of the present disclosure. As shown in Fig. 1, a vibration device 1 includes a plurality of vibration motors 11_1-11_n, a motor control unit 12, an audio input unit 13 and a signal processing unit 14, wherein the vibration motors 11_1-1-11_n is electrically connected to the motor control unit 12, and the motor control unit 12 and audio input unit 13 may be connected to the signal processing unit 14 through wire or in a wireless way. It should be noted that the number of the vibration motors illustrated in Fig. 1 may be at least three, but in other embodiments, the number of the vibration motors of vibration device 1 may be one or two, and the present disclosure does not limit the number of vibration motors. The vibration motors 11_1-11_n may be flat vibration motors but are not limited to thereof. The motor control unit 12 is configured to be controlled by the signal processing unit 14 to control the vibration motors 11_1-11_n. In one implementation, the motor control unit 12 may be a motor control circuit. In another implementation, the motor control unit 12 may be a programmable logic controller. The audio input unit 13 is configured to obtain an audio signal. For example, the audio input 13 may be microphone or other recording equipment, or the audio input unit 13 may be a signal transmission port to receive audio signal from an outside device.

The signal processing unit 14 may include a low-pass filter and a amplitude modulator, and is configured to perform low-pass filtering on the audio signal received by the audio input signal 13 to generate a filtered signal, modulate the filtered signal according to the rated revolution of the vibration motors 11_1-11_n to generate a modulated signal, and control the vibration motors 11_1-11_n through the motor control unit 12 according to the modulated signal, wherein the low-pass filter and the amplitude modulator may be implemented by software, hardware circuit, or a combination of both. In one implementation, the signal processing unit 14 may be a signal processing element with the low-pass filter and the amplitude modulator built in it, and the signal processing element includes an audio processor and/or a microcontroller, wherein the audio processor may be, for example, a digital signal processor (DSP). In another implementation, the signal processing unit 14 may include a low-pass filtering circuit and an amplitude modulation circuit. In yet another implementation, the signal processing unit 14 may include one or both of the low-pass filtering circuit and the amplitude modulation circuit mentioned above and the signal processing element mentioned above at the same time.

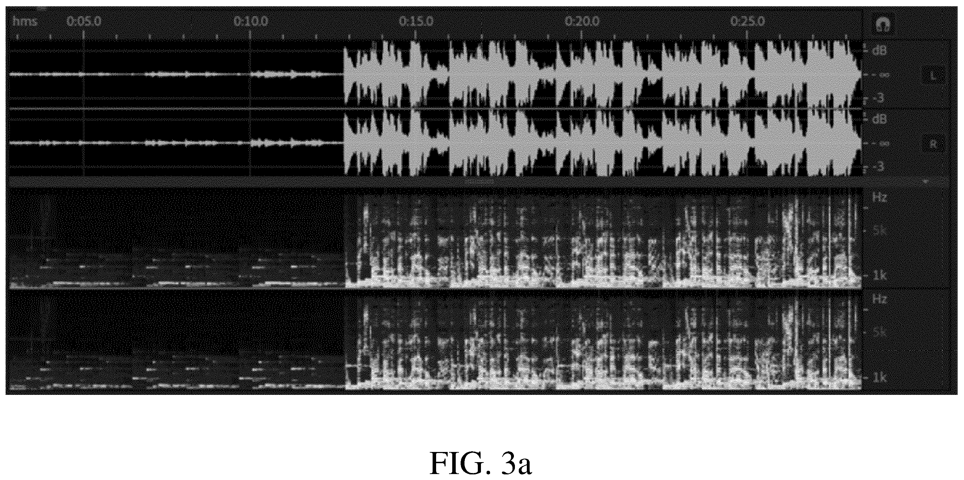

Please refer to Fig. 2, which is a flow chart illustrating an operation method of a vibration device according to an embodiment of the present disclosure. As shown in Fig. 2, the operation method of the vibration device includes step S21: obtaining an audio signal; step S22: performing low-pass filtering on the audio signal to generate a filtered signal; step S23: performing a modulation on the filtered signal according to the rated revolution of the motor to generate a modulated signal; and step S24: controlling the vibration motors according to the modulated signal. The operation method of vibration device may be adapted to the vibration device shown in Fig. 1, the following descriptions exemplarily illustrate the flow chart of the operation method shown in Fig. 2 with the vibration device 1 shown in Fig. 1 and signal waves shown in Fig.3a to Fig. 3d, wherein Fig. 3a to Fig. 3d are schematic diagrams illustrating the signal changes in the process of signal processing of a vibration device according to an embodiment of the present disclosure.

In step S21, the audio input 13 obtains an audio signal. Specifically, step 21 may be using a microphone recording a user's voice or a music in the environment, or may be obtaining the audio file (for example, MPD file) by an external device through electrical connection or internet connection.

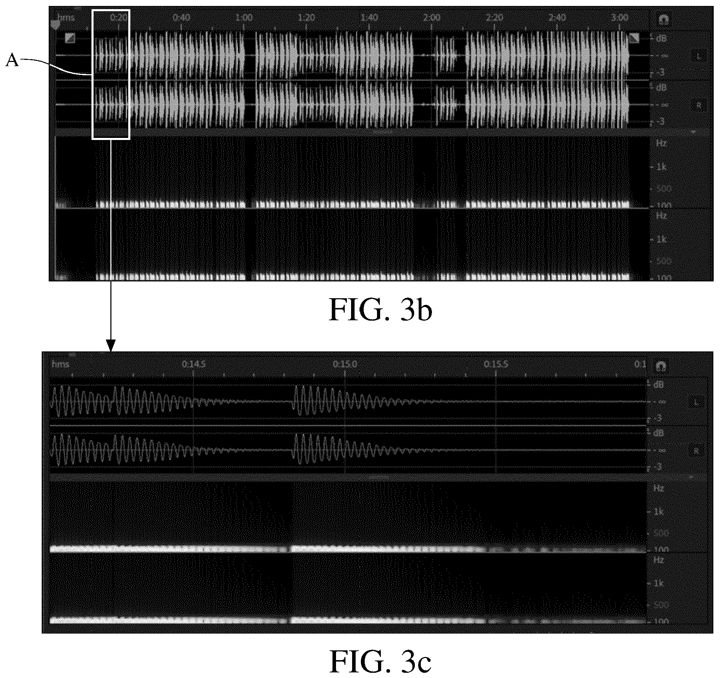

In step S22, the signal processing unit 14 performs low-pass filtering on the audio signal to generate a filtered signal. Specifically, the audio signal (the waveform shown in Fig. 3a) may become the filtered signal through being low-pass filtered by the low-pass filtering circuit inside the signal processing unit 14 or by the low-pass filtering software built in the signal processing unit 14, wherein the filtered signal is as shown in Fig. 3B and the signal shown in Fig. 3c is an enlarged view of the area A shown in Fig. 3b. Moreover, the cut-off frequency of low-pass filtering may be preset as 100 Hz.

In step S23, the signal processing unit 14 modulates the filtered signal according to the rated revolution of vibration motors 11-_1-11_n to generate the modulated signal. Specifically, the modulated signal includes an amplitude parameter and a frequency parameter, the amplitude parameter corresponds to the amplitude of the filtered signal and the frequency parameter corresponds to the rated revolution of the vibration motors 11_1-11_n. More specifically, the modulating process may be expressed by the relation below:

$$S_v = S_{LP} \times \sin(2\pi\omega t)$$

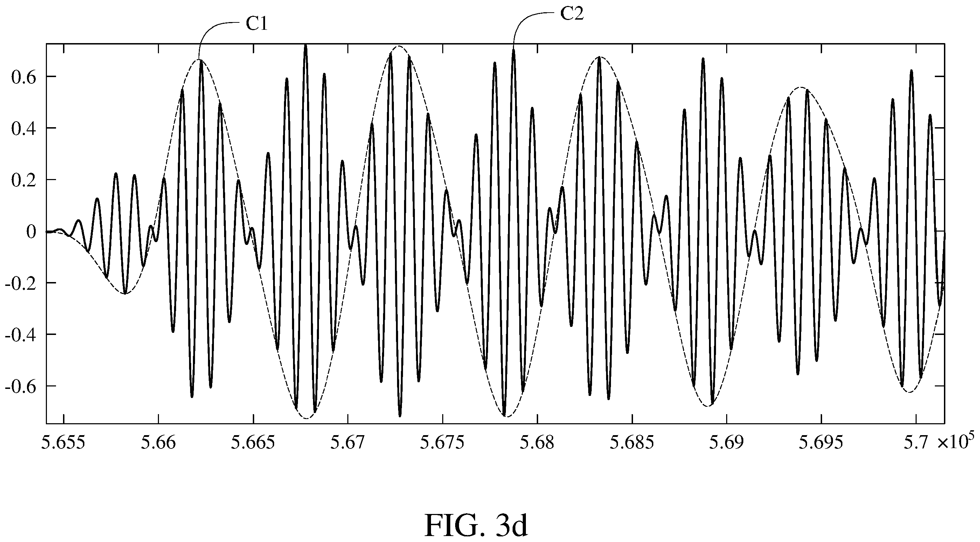

In the above relation, "$S_v$" is the modulated signal, "$S_{LP}$" is the filtered signal, and "$\omega$" is the rated revolution of the vibration motors 11_1-11_n. This modulated signal includes the amplitude and frequency of the vibration motors 11_1-11_n, the modulated sine signal uses the rated revolution of the vibration motors as the base frequency of the modulation, $S_{LP}$ provides the amplitude magnitude, that is, the vibration motors 11_1-11_n may have part of the amplitude magnitude of $S_{LP}$ while spinning with the original base frequency to provide users with feelings of rhythm. As shown in Fig. 3d, the signal C1 is the modulated signal and the signal C2 is the filtered signal.

In step S24, the signal processing unit 14 controls the vibration motors 11_1-11_n through the motor control unit S12 according to the modulated signal, that is, the modulated signal mentioned above is the control signal of the vibration motors 11_1-11_n. Through modulation based on the vibrating revolution coordinating with the low frequency part of the filtered signal mentioned above, the vibration motors may generate vibration like the low frequency part of the input signal under the change of current and voltage, and the modulated amplitude magnitude determines the vibration time and intensity of the vibration in the input signal directly, and because of the alternating current characteristic of the sinusoidal signal, the vibration motors may achieve different feelings of vibrating comparing to the vibration motors controlled by a direct current.

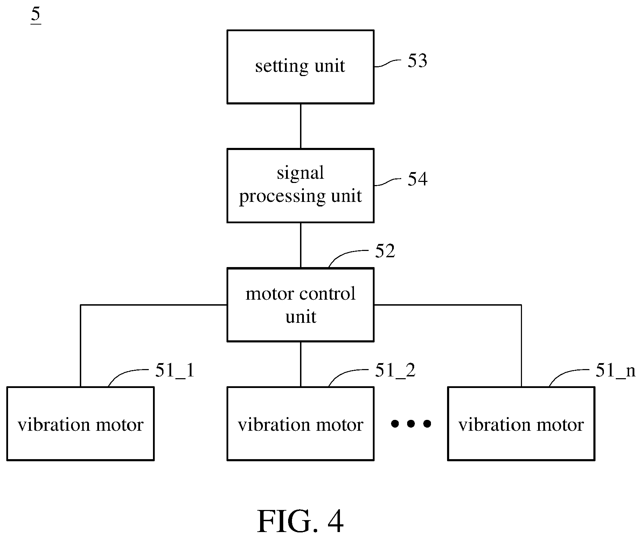

Please refer to Fig. 4, which is a functional block diagram illustrating a vibration device according to another embodiment of the present disclosure. As shown in Fig. 4, the vibration device 5 includes a plurality of vibration motors 51_1-51_n, a motor control unit 52, a signal processing unit 54 and setting unit 53. The vibration motors 51_1-51_n may be connected to the signal processing unit 54 through wire or in a wireless way. It should be noted that the number of the vibration motors 51_1-51_n illustrated in Fig. 3 is at least 3, but in other embodiments, the number of vibration motors may be one or two, the present disclosure does not limit the number of the vibration motors.

The vibration motors 51_1-51_n may be but not limited to, for example, flat vibration motors. The motor control unit 52 is configured to control the vibration motors 51_1-51_n. In an implementation, the motor control unit 52 may be a motor control circuit. In another implementation, the motor control unit 52 may be a programmable logic controller. The setting unit 53 may be, for example, buttons providing multiple options, a display touch panel that can provide a user setting interface, and other input devices or signal transmission port, and is configured to receive a beat setting instruction, the beat setting instruction includes a speed parameter and a note parameter. Specifically, the speed parameter may be beats per minutes (BPM) and the note parameter may be quarter note, eighth note or the likes.

The signal processing unit 54 may calculate the vibration time according to the speed parameter and the note parameter, and control the vibration motors 51_1-51_n through the motor control unit 52. Further, the signal processing unit 54 may control the vibration motors 51_1-51_n through the motor control unit 52 by using a pulse-width modulation signal (PWM). Furthermore, the signal processing unit 54 may generate the PWM signal to control the vibration motors 51_1-51_n through the motor control unit 52 when a time condition is met. For example, the signal processing unit 54 may include a microcontroller with a program of the operation mentioned above built in it. The particular way of calculating the vibration time may be described hereinafter.

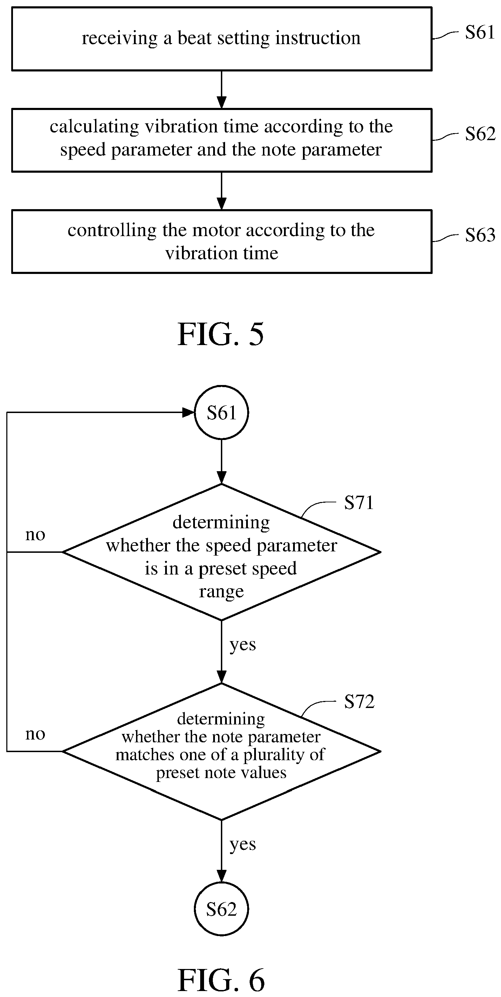

Please refer to Fig. 5, which is a flow chart illustrating an operation method of a vibration device according to another embodiment of the present disclosure. As shown in Fig. 5, the operation method of vibration device includes step S61: receiving a beat setting instruction; step S62: calculating the vibration time according to the speed parameter and the note parameter; and step S63: controlling the motor according to the vibration time. The operation method shown in Fig. 5 may be adapted to the vibration device 5 shown in Fig. 4, the operation method of a vibration device may be described hereinafter with the vibration device 5 shown in Fig. 4.

In step S61, the setting unit 53 receives the beat setting instruction.

In step S62, the signal processing unit 54 calculates the vibration time according to a speed parameter and a note parameter. Specifically, the signal processing unit 54 may generate a first value by dividing a preset time length by a value of the speed parameter, and generate a second value by dividing a preset note value by a value of the note parameter, and divide the first value by the second value to generate the vibration time. More specifically, the vibration time may be calculated by the formula below:

$$T = \frac{(60s/BPM)}{(Quarter\_Note/NOTE)}$$

In the above formula, "60s" means that the preset time length is 60 seconds; "BPM" represents the value of the speed parameter included in the beat setting instruction; "Quarter_Note" represents that the preset note value is 1/4; "NOTE" represents the value of the note parameter included in the beat setting instruction. For example, when the value of the speed parameter is 200 and the value of the note parameter is 1/16, the first value is 60 divided by 200, which is 0.3. The second value is 1/4 divided by 1/16, which is 4. The vibration time is 0.3 divided by 4, which is 0.075 seconds, and that is 75 ms.

In step S63, the signal processing unit 54 controls the vibration motors 51_1-51_n through the motor control unit 52 according to the vibration time. Moreover, the signal processing unit 54 may generate the PWM signal according to the vibration time to control the vibration motors 51_1-51_n through the motor control unit 52.

Please refer to Fig. 6, which is a flow chart illustrating an operation method of a vibration device according to still another embodiment of the present disclosure. In this embodiment, the operation method of a vibration device includes steps S61-S63 shown in Fig. 2, and step S62 of calculating the vibration time further includes step S71: determining whether the value of the speed parameter is in a preset speed range; and step 72: determining whether the value of the note parameter matches one of a plurality of preset note values. The flow chart illustrated in Fig. 6 may be adapted to the vibration device 5 illustrated in Fig. 4, and the flow chart illustrated in Fig. 6 is described with the vibration device illustrated in Fig. 4 hereinafter.

In step S71, the signal processing unit 54 determines whether the value of the speed parameter from the setting unit 53 is in a preset speed range. For example, the preset speed range may be equal to or greater than 10 BPM and smaller or equal to 200 BPM.

In step S72, the signal processing unit 54 determines whether the value of the note parameter matches one of the plurality of preset note values. For example, the preset note value may be a quarter note, an eighth note, a sixteenth note, a triplet, or a triplet with the middle one rested.

Step S71 may be regarded as the first determination and step S72 may be regarded as the second determination. It should be noted that the operation order of the two determination is not limited to the illustration of Fig. 6, and step S72 may be perform before or at the same time with step S71. When the result of the first determination and the second determination is positive (i.e., "yes"), which means that the value of the speed parameter is in the preset speed range and the note parameter matches one of the plurality of preset note values, the signal processing unit 54 performs step S62 to calculate the vibration time; when the result of the first determination or the second determination is negative (i.e., "no"), which means that the speed parameter is not in the preset speed range or the note parameter does not match any preset note value, the signal processing unit 54 operates step S61 to wait for another beat setting instruction from the setting unit 53, and performs the first determination and the second determination mentioned-above on this beat setting instruction.

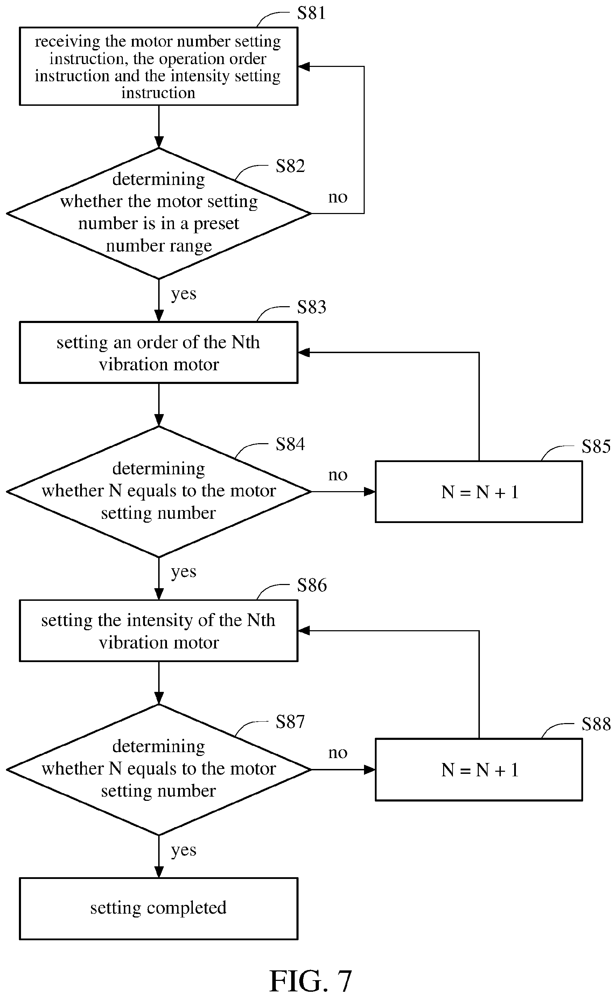

Please refer to Fig. 7, which is a flow chart illustrating an operation method of a vibration device according to yet another embodiment of the present disclosure. In this embodiment, in addition to the steps S61-S63 shown in Fig. 5, the operation method further includes the flow process of motor number setting, operation order setting and intensity setting, including step S81: receiving the motor number setting instruction, the operation order instruction and the intensity setting instruction; step S82: determining whether the motor setting number is in a preset number range; step S83: setting an order of the Nth vibration motor; step S84: determining whether N equals to the motor setting number; step S85: N=N+1; step S86: setting the intensity of the Nth vibration motor; step S87: determining whether N equals to the motor setting number; and step S88: N=N+1. The method of the motor number setting, the operation order setting and the intensity setting illustrated in Fig. 7 may be adapted the vibration device 5 illustrated in Fig. 5, the flow process of the motor number setting, the operation order setting and the intensity setting is described with the vibration device illustrated in Fig. 4 hereinafter.

In step S81, the signal processing unit 54 receives the motor number setting instruction, the operation order instruction and the intensity setting instruction. Specifically, the motor number setting instruction may instruct the motor setting number (referred to as M in the following descriptions) which is the number of motor to be turned on; the operation order instruction may instruct the operation order between M motors of the vibration motors 51_1-51_n, for example but not limited to, using the arrangement order of the motors as the operation order; the intensity setting instruction may instruct the motor setting intensity, such as a percentage of the highest intensity.

In step S82, the signal processing unit 54 determines whether the motor setting number is in the preset number range. The preset number range may be, for example, the total number of the vibration motors 51_1-51_n. For example, the vibrating device 5 has 5 motors in total, when the motor setting number is 1, the signal processing unit 54 performs step S83; when the motor setting number is 6, and the signal processing unit 54 may wait for a new motor number setting instruction.

In step S83, the signal processing unit 54 sets the order of the Nth vibration motor. For example, the signal processing unit 54 may set the order of the first vibration motor as 3, then the first vibration motor may be the third motor to vibrate.

In step S84, the signal processing unit 54 determines whether N equals to the motor setting number, specifically, this step is configured to determine whether the vibration motor that is set right now is the last motor. For example, when the motor setting number is 5 and N equals to 1, N does not equal to the motor setting number, and the signal processing unit 54 may operate step S85, and when the motor setting number is 5 and N is 5, the signal processing unit 54 operates step S86.

In step S85, the signal processing unit operates N=N+1, and operates step S83 again. Specifically, this step may set the motor to be set to the next motor. For example, when N=1, after performing N=N+1, N=2, and the second vibration motor will be set when step S83 is performed again.

The process method of steps S86, S87, and S88 are similar to steps S83, S84, and S85, the difference point is the motor parameter that is set is the intensity parameter, so the description may not be repeated herein. It should be noted that steps S86-S88 are performed after steps S83-S85, but in other embodiments, steps S86-S88 may be performed before or at the same time as steps S83-S85, and when performing step S86 for the first time, N may be set to its initial value (e.g., 1 or other value which is not greater than the motor setting number).

Additionally, although the flow chart in Fig. 7 illustrates receiving the motor number setting instruction, the operation order setting instruction and the intensity setting instruction to be performed in one process, but the present disclosure is not limited thereto. In other embodiments, there may be only one or two of the three instructions mentioned above, in other words, in the operation method of a vibration device, there may be one or two of the combination of steps S81-S82, the combination of steps S83-S85, and the combination of steps S86-S88.

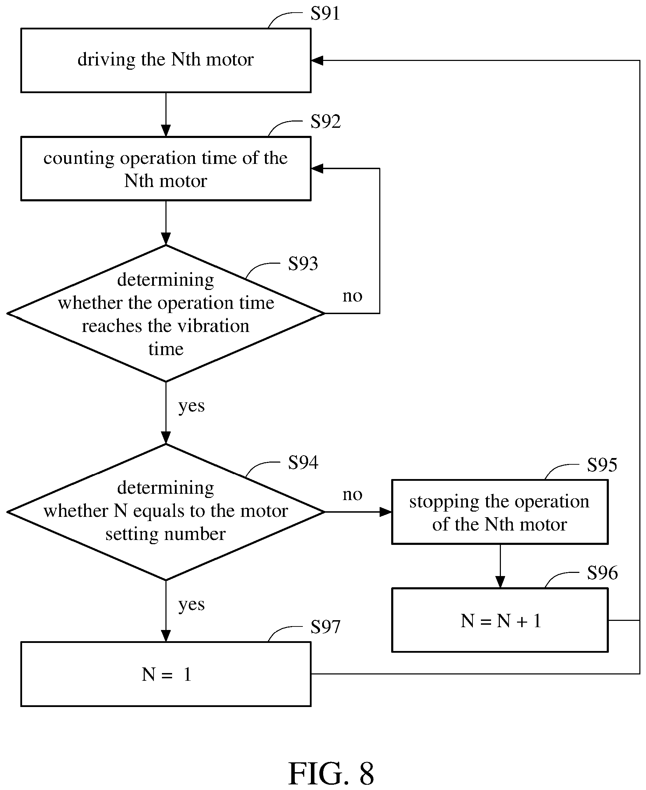

Please refer to Fig. 8, which is a flow chart illustrating an operation method of a vibration device according to further another embodiment of the present disclosure. The flow process shown in Fig. 8 may be an implementation of step S63 of controlling the vibration motors according to the vibration time shown in Fig. 5. As shown in Fig. 8, the method of controlling the vibration motors includes step S91: driving the Nth motor; step S92: counting the operation time of the Nth motor; step S93: determining whether the operation time reaches the vibration time; step S94: determining whether N equals to the motor setting number; step S95: stopping the operation of the Nth motor; step S96: N=N+1; and step S97: N=1. The method of driving the vibrating method shown in Fig. 8 may be adapted to the vibration device 5 shown in Fig. 4, the method of controlling the vibration motors shown in Fig. 8 is described with the vibration device 5 shown in Fig. 4 hereinafter.

In step S91, the signal processing unit 54 drives the Nth motor through the motor control unit 52, wherein N is a natural number, and the initial value may be 1, the vibration motor 51_1 may be regarded as the Nth motor as an example hereinafter.

In step S92, the signal processing unit 54 counts the operation time of the vibration motor 51_1.

In step S93, the signal processing unit 54 may determine whether the operation time reaches the vibration time, wherein the vibration time is obtained through step S62. For example, assuming the vibration time is 4 seconds, when the operation time reaches 4 seconds, the signal processing unit 54 may perform step S94.

In step S94, signal processing unit 54 determines whether N equals to the motor setting number, wherein the motor setting number may be obtained through the motor setting instruction mentioned above. Specifically, this step is configured to determine whether the current setting motor is the last motor. For example, assuming the motor setting number is 3, when N is 2, which means that the current driving motor is not the last motor, so the signal processing unit 54 operates step S95, and when N equals to 3, which means that the current performing motor is the last motor, so the signal processing unit 54 operates step S97.

In step S95, the signal processing unit 54 stops the operation of the vibration motor 51_1 through the motor control unit 52. Specifically, it stops the motor that is currently vibrating.

In step S96, the signal processing unit operates N=N+1. Specifically, it changes to control the next motor of the vibration motor 51_1, such as the vibration motor 51_2 or the next motor of vibration motor 51_1 set in the operation order instruction mentioned above.

In step S97, signal processing unit 54 sets N as 1, and then performs step S91, which means to drive the vibration motors from the start. In another embodiment, step S97 may be the end of control.

Moreover, in steps S91~S97 performed by the signal processing unit 54, the control of the vibration motor may be implemented with the PWM signal method.

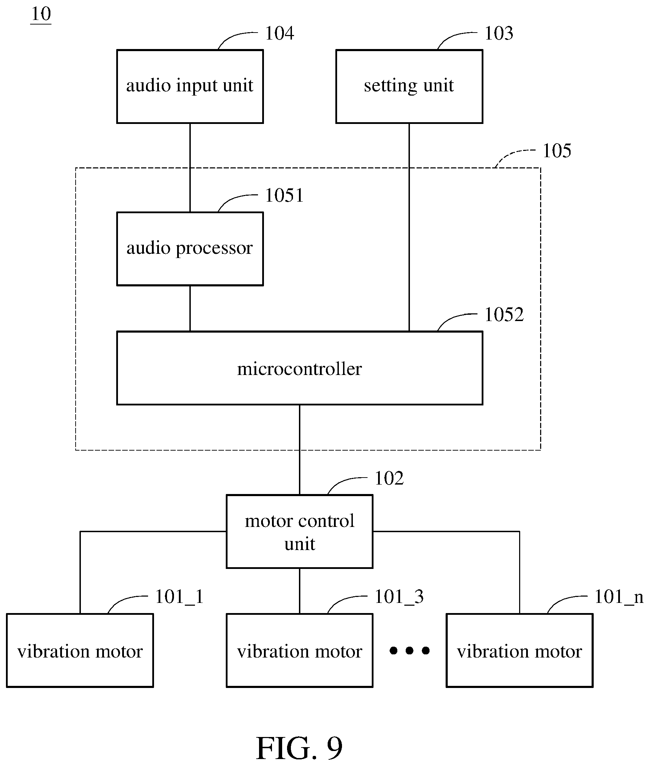

Please refer to Fig. 9, which is a functional block diagram illustrating a vibration device according to another embodiment of the present disclosure. As shown in Fig 9, the vibration device 10 includes a plurality of vibration motors 10_1-10_n, a motor control unit 102, a setting unit 103, an audio input unit 104, and a signal processing unit 105, wherein the implementation element and the function of the vibration motors 10_1-10_n, the setting unit 103, and the audio input unit 104 are the same as the ones with the same names shown in Fig. 1 and Fig. 4, so they will not be repeated herein. The number of the vibration motors 10_1-10_n illustrated in Fig. 9 is at least three, but in other embodiments, the number of the vibration device 10 may be one or two, the present disclosure does not limit the number of the vibration motors.

The vibration device 10 shown in Fig. 9 may have the function of the vibration device 1 illustrated in Fig. 1 and the function of the vibration device 5 illustrated in Fig. 4. Specifically, the vibration device 10 may have two modes, one mode is a music mode and another mode is a beat mode. When the vibration device 10 id in the music mode, it may perform the operation method of the vibration device 1 illustrated in Fig. 1, when the vibration device 10 is in the beat mode, it may perform the operation method of the vibration device 5 illustrated in Fig. 4.

More specifically, the signal processing unit 105 of the vibration device 10 may include an audio processor 1051 (for example, DSP) and a microcontroller 1052. The audio processor 1051 is connected to the audio input unit 104, and is configured to perform low-pass filtering on the received audio signal to generate a filtered signal, and modulates the filtered signal according to the rated revolution of the vibration motors 10_1-10_n to generate the modulated signal. The detailed operation content are the same as the operation of the signal processing unit 14 of the vibration device 1 mentioned above, so they will not be repeated herein. The microcontroller 1052 is connected to the audio processor 1051 and the motor control unit 102, and is configured to control the vibration motors 10_1-10_n through the motor control unit 102 according to the modulated signal generated by the audio processor 1051, or calculate the vibration time according to a speed parameter and a note parameter of a beat setting instruction and control the vibration motors 10_1-10_n through the motor control unit 102 according to the vibration time. The detailed content of the operation is the same as the operation of the signal processing unit 54 of the vibration device 5 mentioned above, and it is not repeated herein.

In another embodiment, the signal processing unit 105 of the vibration device 10 may include a microcontroller 1052 and does not include the audio processor 1051. In this embodiment, the microcontroller 1052 may perform the operation of the signal processing unit 14 of the vibration device 1 mentioned above when receiving an audio signal, and may perform the operation of the signal processing unit 54 of the vibration device 5 mentioned above when receiving a beat setting instruction.

One or more embodiments of the vibration device mentioned above and the operation method thereof may be adapted to various kinds of equipment having a vibrating function, for example, a massage chair, a drummer stool, or the likes, but the present disclosure is not limited to thereof.

In summary, the vibrating system and operation method thereof disclosed by the present application may provide adjusting multiple vibrating parameters of a vibration motor according to an audio signal or outside inputs to provide the users various feelings of vibration.

## Claims

1. A vibration device (1, 10), comprising:

   at least one vibration motor (11_1-11_n);
   a motor control unit (12, 102) connected to the at least one vibration motor (11_1-11_n);
   an audio input unit (13, 104) configured to obtain an audio signal;

   a signal processing unit (14, 105) connected to the audio input unit (13,104) and the motor control unit (12, 102), and configured to perform low-pass filtering on the audio signal to generate a filtered signal, perform an amplitude modulation on the filtered signal according to a rated revolution of the at least one vibration motor (11_1-11_n) to generate a modulated signal, and control the at least one vibration motor (11_1-11_n) through the motor control unit (12,102) according to the modulated signal; and
   a setting unit (103) connected to the signal processing unit (105), **characterized in that** the setting unit (103) is configured to receive a beat setting instruction comprising a speed parameter and a note parameter;
   wherein the signal processing unit (105) is further configured to calculate vibration time according to the speed parameter and the note parameter, and control the at least one vibration motor (11_1-11_n) through the motor control unit (102) according to the vibration time; and
   wherein the signal processing unit (105) is further configured to perform a first determination of whether a value of the speed parameter is in a preset speed range and a second determination of whether a value of the note parameter matches one of a plurality of preset note values on the beat setting instruction before calculating the vibration time, wherein when a result of the first determination and a result of the second determination are positive, the signal processing unit (105) calculates the vibration time, and when the result of the first determination or the second determination is negative, the signal processing unit (105) waits for another beat setting instruction obtained from the signal processing unit (105) and performs the first determination and the second determination on the another beat setting instruction.

2. The vibration device (1) of claim 1, wherein the modulated signal comprises an amplitude parameter and a frequency parameter, the amplitude parameter corresponds to an amplitude of the filtered signal, and the frequency parameter corresponds to the rated revolution of the at least one motor (11_1-11_n).

3. The vibration device (1) of claim 1 or 2, wherein the signal processing unit (14, 105) presets 100 Hz as a cut-off frequency of the low-pass filtering.

4. The vibration device (10) of one of claims 1 to 3, wherein the signal processing unit (105) comprises:

   an audio processor connected to the audio input unit, and configured to perform the low-pass filtering on the audio signal to generate the filtered signal and perform the amplitude modulation on the filtered signal according to a rated resolution of the vibration motor to generate the modulated signal; and

a microcontroller (1052) connected to the audio processor (1051) and the motor control unit (102), and configured to control the at least one motor (11_1-11_n) through the motor control unit (102) according to the modulated signal, or calculate the vibration time according to the speed parameter and the note parameter and control the at least one vibration motor (11_1-11_n) through the motor control unit (102) according to the vibration time.

5. The vibration device (10) of one of claims 1 to 4, wherein the signal processing unit (105) generates a first value by dividing a preset time length by the speed parameter, generates a second value by dividing a value of the note parameter by a preset note value, and divides the first value with the second value to generate the vibration time.

6. The vibration device (10) of one of claims 1 to 5, wherein a number of the at least one vibration motor (51_1-51_n) is plural, the setting unit (103) is further configured to receive a motor number setting instruction, the signal processing unit (105) is further configured to drive a Nth motor of the at least one vibration motor (51_1-51_n) through the motor control unit (102), count operation time of the Nth motor, and drives a (N+1)th motor of the at least one vibration motor (51_1-51_n) through the motor control unit (102) when the operation time of the Nth motor reaches the vibration time, wherein N is a natural number, and (N+1) is not greater than a motor setting number of the motor number setting instruction.

7. The vibration device (10) of one of claims 1 to 6, wherein a number of the at least one vibration motor (51_1-51_n) is plural, the setting unit (103) is further configured to receive a motor number setting instruction and an operation order setting instruction, the signal processing unit (105) is further configured to perform a determination of whether a motor setting number is in a preset number range on the motor number setting instruction, when a result of the determination is positive, the signal processing unit (105) sets an operation number and order of the at least one vibration motor (51_1-51_n) through the motor control unit (102) according to the motor number setting instruction and the operation order setting instruction, and when the result of the determination is negative, the signal processing unit (105) waits for another motor number setting instruction from the setting unit (103) and performs the determination on the another motor number setting instruction.

8. The vibration device (10) of one of claims 1 to 7, wherein the setting unit (103) is further configured to receive an intensity setting instruction, and the signal processing unit (105) is further configured to set an intensity of the at least one vibration motor (51_1-51_n) through the motor control unit (102) according to the intensity setting instruction.

9. An operation method of a vibration device (1), comprising:

receiving an audio signal;
performing low-pass filtering on the audio signal to generate a filtered signal;
performing a modulation on the filtered signal according to a rated revolution of at least one vibration motor (11_1-11_n) to generate a modulated signal;
controlling the at least one vibration motor (11_1-11_n) according to the modulated signal;
receiving a beat setting instruction comprising a speed parameter and a note parameter;
calculating vibration time according to the speed parameter and the note parameter; and
controlling at least one vibration motor (51_1-51_n) according to the vibration time;

**characterized in**, before calculating the vibration time, further comprising:

performing a first determination of whether a value of the speed parameter is in a preset speed range;
performing a second determination of whether a value of the note parameter matches one of a plurality of preset note values; and
when a result of the first determination or a result of the second determination is negative, waiting for another beat setting instruction and performing the first determination and second determination on the another beat setting instruction;
wherein calculating the vibration time is performed when the result of the first determination and the result of the second determination are positive.

10. The operation method of claim 9, wherein the modulated signal comprises an amplitude parameter and a frequency parameter, the amplitude parameter corresponds to an amplitude of the filtered signal, and the frequency parameter corresponds to the rated revolution of the at least one vibration motor (11_1-11_n).

11. The operation method of claim 9 or 10, wherein a cutoff frequency of the low-pass filtering is preset as 100 Hz.

**12.** The operation method of claim 9, wherein calculating the vibration time comprises:

dividing a preset time length by a value of the speed parameter to generate a first value;
dividing a value of the note parameter by a preset note value to generate a second value; and
dividing the first value by the second value to generate the vibration time.

**13.** The operation method of claim 9 to 12, wherein a number of the at least one vibrating motor (51_1-51_n) is plural, and the operation method further comprises:

receiving a motor number setting instruction;
wherein controlling the at least one vibration motor (51_1-51_n) according to the vibration time comprises:

driving an Nth motor of the at least one vibration motor (51_1-51_n);
counting operation time of the Nth motor; and
when the operation time of the Nth motor reaches the vibration time, driving a (N+1)th motor of the at least one motor through a motor control unit (102);
wherein N is a natural number, and (N+1) is not greater than a motor setting number of the motor number setting instruction.

**14.** The operation method of a vibration device (5) of one of claims 9 to 13, wherein a number of the at least one motor (51_1-51_n) is plural, and the operation method further comprises:

receiving a motor number setting instruction and an operation order setting instruction;
performing a determination of whether a motor setting number of the motor number setting instruction is in a preset number range;
when a result of the determination is positive, setting an operation number and an operation order of the at least one vibration motor (51_1-51_n) according to the motor number setting instruction and the operation order setting instruction; and
when the result of the determination is negative, waiting for another motor number setting instruction and performing the determination on the another motor number setting instruction.

**15.** The operation method of one of claims 9 to 14, further comprises:

receiving an intensity setting instruction; and

setting an intensity of the at least one vibration motor (51_1-51_n) according to the intensity setting instruction.

**Patentansprüche**

**1.** Vibrationsvorrichtung (1, 10), umfassend:

mindestens einen Vibrationsmotor (11_1-11_n);
eine Motorsteuereinheit (12, 102), die mit dem mindestens einen Vibrationsmotor (11_1-11_n) verbunden ist;
eine Audioeingabeeinheit (13, 104), die so konfiguriert ist, um ein Audiosignal zu erhalten;
eine Signalverarbeitungseinheit (14, 105), die mit der Audioeingabeeinheit (13, 104) und der Motorsteuereinheit (12, 102) verbunden ist und die so konfiguriert ist, um eine Tiefpassfilterung des Audiosignals durchzuführen, um ein gefiltertes Signal zu erzeugen, um eine Amplitudenmodulation des gefilterten Signals gemäß einer Nenndrehzahl des mindestens einen Vibrationsmotors (11_1-11_n) durchzuführen, um ein moduliertes Signal zu erzeugen, und um den mindestens einen Vibrationsmotor (11_1-11_n) über die Motorsteuereinheit (12, 102) gemäß dem modulierten Signal zu steuern; und
eine mit der Signalverarbeitungseinheit (105) verbundene Einstelleinheit (103), **dadurch gekennzeichnet, dass** die Einstelleinheit (103) so konfiguriert ist, um eine Takt-Einstellungsanweisung zu empfangen, die einen Geschwindigkeitsparameter und einen Taktparameter umfasst;
wobei die Signalverarbeitungseinheit (105) ferner dazu konfiguriert ist, eine Schwingungszeit gemäß dem Geschwindigkeitsparameter und dem Taktparameter zu berechnen und den mindestens einen Vibrationsmotor (11_1-11_n) über die Motorsteuereinheit (102) gemäß der Schwingungszeit zu steuern; und
wobei die Signalverarbeitungseinheit (105) ferner so konfiguriert ist, um vor dem Berechnen der Schwingungszeit eine erste Bestimmung, ob ein Wert des Geschwindigkeitsparameters in einem voreingestellten Geschwindigkeitsbereich liegt, und eine zweite Bestimmung, ob ein Wert des Taktparameters mit einem von mehreren voreingestellten Taktwerten auf der Takt-Einstellungsanweisung übereinstimmt, durchzuführen, wobei, wenn ein Ergebnis der ersten Bestimmung und ein Ergebnis der zweiten Bestimmung positiv sind, die Signalverarbeitungseinheit (105) dann die Schwingungszeit berechnet, und wenn das Ergebnis der ersten Bestimmung oder das Ergebnis der zweiten Bestimmung negativ ist, die Signalverarbeitungseinheit (105) dann auf eine weitere Takt-Einstellungsanweisung wartet, die von der Signalverarbeitungseinheit (105) erhalten wird, und die erste Bestimmung und die zweite Bestimmung für die weitere Takt-Einstellungsanweisung durchzuführen.

2. Vibrationsvorrichtung (1) nach Anspruch 1, wobei das modulierte Signal einen Amplitudenparameter und einen Frequenzparameter umfasst, der Amplitudenparameter einer Amplitude des gefilterten Signals entspricht und der Frequenzparameter der Nenndrehzahl des mindestens einen Motors (11_1-11_n) entspricht.

3. Vibrationsvorrichtung (1) nach Anspruch 1 oder 2, wobei die Signalverarbeitungseinheit (14, 105) als Grenzfrequenz der Tiefpassfilterung 100 Hz voreinstellt.

4. Vibrationsvorrichtung (10) nach einem der Ansprüche 1 bis 3, wobei die Signalverarbeitungseinheit (105) umfasst:

einen Audio-Prozessor, der mit der Audioeingabeeinheit verbunden ist und so konfiguriert ist, um die Tiefpassfilterung des Audiosignals durchzuführen, um das gefilterte Signal zu erzeugen, und um die Amplitudenmodulation des gefilterten Signals gemäß einer Nennauflösung des Vibrationsmotors durchzuführen, um das modulierte Signal zu erzeugen; und
einen Mikrocontroller (1052), der mit dem Audio-Prozessor (1051) und der Motorsteuereinheit (102) verbunden ist und der so konfiguriert ist, um den mindestens einen Motor (11_1-11_n) über die Motorsteuereinheit (102) entsprechend dem modulierten Signal zu steuern oder um die Schwingungszeit entsprechend dem Geschwindigkeitsparameter und dem Taktparameter zu berechnen und den mindestens einen Vibrationsmotor (11_1-11_n) über die Motorsteuereinheit (102) entsprechend der Schwingungszeit zu steuern.

5. Vibrationsvorrichtung (10) nach einem der Ansprüche 1 bis 4, wobei die Signalverarbeitungseinheit (105) einen ersten Wert durch Teilen einer voreingestellten Zeitdauer durch den Geschwindigkeitsparameter erzeugt, einen zweiten Wert durch Teilen eines Wertes des Taktparameters durch einen voreingestellten Taktwert erzeugt und den ersten Wert durch den zweiten Wert teilt, um die Schwingungszeit zu erzeugen.

6. Vibrationsvorrichtung (10) nach einem der Ansprüche 1 bis 5, wobei eine Anzahl des mindestens einen Vibrationsmotors (51_1-51_n) eine Vielzahl ist, die Einstelleinheit (103) ferner dazu konfiguriert ist, eine Motornummer-Einstellungsanweisung zu empfangen, die Signalverarbeitungseinheit (105) ferner dazu konfiguriert ist, einen N-ten Motor des mindestens einen Vibrationsmotors (51_1-51_n) über die Motorsteuereinheit (102) anzutreiben, die Betriebszeit des N-ten Motors zu erfassen und einen (N+1)-ten Motor des mindestens einen Vibrationsmotors (51_1-51_n) über die Motorsteuereinheit (102) anzutreiben, wenn die Betriebszeit des N-ten Motors die Schwingungszeit erreicht, wobei N eine natürliche Zahl ist und (N+1) nicht größer ist als eine Motornummer-Einstellzahl der Motornummer-Einstellungsanweisung.

7. Vibrationsvorrichtung (10) nach einem der Ansprüche 1 bis 6, wobei eine Anzahl des mindestens einen Vibrationsmotors (51_1-51_n) eine Vielzahl ist, die Einstelleinheit (103) ferner dazu konfiguriert ist, eine Motornummer-Einstellungsanweisung und eine Betriebsbefehl-Einstellungsanweisung zu empfangen, die Signalverarbeitungseinheit (105) ferner dazu konfiguriert ist, eine Bestimmung durchzuführen, ob eine Motornummer-Einstellzahl in einem voreingestellten Zahlenbereich der Motornummer-Einstellungsanweisung liegt, wobei, wenn ein Ergebnis der Bestimmung positiv ist, die Signalverarbeitungseinheit (105) eine Betriebsnummer und eine Reihenfolge des mindestens einen Vibrationsmotors (51_1-51_n) durch die Motorsteuereinheit (102) gemäß der Motornummer-Einstellungsanweisung und der Betriebsbefehls-Einstellungsanweisung steuert, und wenn das Ergebnis der Bestimmung negativ ist, die Signalverarbeitungseinheit (105) auf eine weitere Motornummer-Einstellungsanweisung von der Einstelleinheit (103) wartet und die Bestimmung gemäß der weiteren Motornummer-Einstellungsanweisung durchführt.

8. Vibrationsvorrichtung (10) nach einem der Ansprüche 1 bis 7, wobei die Einstelleinheit (103) ferner so konfiguriert ist, um eine Intensitäts-Einstellungsanweisung zu empfangen, und die Signalverarbeitungseinheit (105) ferner so konfiguriert ist, um eine Intensität des mindestens einen Vibrationsmotors (51_1-51_n) durch die Motorsteuereinheit (102) gemäß der Intensitäts-Einstellungsanweisung steuert.

9. Betriebsverfahren einer Vibrationsvorrichtung (1), umfassend:

Empfangen eines Audiosignals;
Durchführen einer Tiefpassfilterung des Audiosignals, um ein gefiltertes Signal zu erzeugen;
Durchführen einer Modulation des gefilterten Signals gemäß einer Nenndrehzahl mindestens eines Vibrationsmotors (11_1-11_n), um ein moduliertes Signal zu erzeugen;

Steuern des mindestens einen Vibrationsmotors (11_1-11_n) gemäß dem modulierten Signal;

Empfangen einer Takt-Einstellungsanweisung, die einen Geschwindigkeitsparameter und einen Taktparameter umfasst;

Berechnen einer Schwingungszeit gemäß dem Geschwindigkeitsparameter und dem Taktparameter; und

Steuern des mindestens einen Vibrationsmotors (51_1-51_n) gemäß der Schwingungszeit; **dadurch gekennzeichnet, dass** vor dem Berechnen der Schwingungszeit das Betriebsverfahren ferner umfasst:

Durchführen einer ersten Bestimmung, ob ein Wert des Geschwindigkeitsparameters in einem voreingestellten Geschwindigkeitsbereich liegt;

Durchführen einer zweiten Bestimmung, ob ein Wert des Taktparameters mit einem von mehreren voreingestellten Taktwerten übereinstimmt; und

wenn ein Ergebnis der ersten Bestimmung oder ein Ergebnis der zweiten Bestimmung negativ ist, Warten auf eine weitere Takt-Einstellungsanweisung und Durchführen der ersten Bestimmung und der zweiten Bestimmung mit der weiteren Takt-Einstellungsanweisung;

wobei das Berechnen der Schwingungszeit durchgeführt wird, wenn das Ergebnis der ersten Bestimmung und das Ergebnis der zweiten Bestimmung positiv sind.

10. Betriebsverfahren nach Anspruch 9, wobei das modulierte Signal einen Amplitudenparameter und einen Frequenzparameter umfasst, wobei der Amplitudenparameter einer Amplitude des gefilterten Signals entspricht und der Frequenzparameter der Nenndrehzahl des mindestens einen Vibrationsmotors (11_1-11_n) entspricht.

11. Betriebsverfahren nach Anspruch 9 oder 10, wobei eine Grenzfrequenz der Tiefpassfilterung auf 100 Hz voreingestellt ist.

12. Betriebsverfahren nach Anspruch 9, wobei das Berechnen der Schwingungszeit umfasst:

Teilen einer voreingestellten Zeitdauer durch einen Wert des Geschwindigkeitsparameters, um einen ersten Wert zu erzeugen;

Teilen eines Wertes des Taktparameters durch einen voreingestellten Taktwert, um einen zweiten Wert zu erzeugen; und

Teilen des ersten Wertes durch den zweiten Wert, um die Schwingungszeit zu erzeugen.

13. Betriebsverfahren nach Anspruch 9 bis 12, wobei eine Anzahl des mindestens einen Vibrationsmotors (51_1-51_n) eine Vielzahl ist und das Betriebsverfahren ferner umfasst:

Empfangen einer Motornummer-Einstellungsanweisung;

wobei das Steuern des mindestens einen Vibrationsmotors (51_1-51_n) gemäß der Schwingungszeit umfasst:

Antreiben eines N-ten Motors des mindestens einen Vibrationsmotors (51_1-51_n);

Zählen der Betriebszeit des N-ten Motors; und

wenn die Betriebszeit des N-ten Motors die Schwingungszeit erreicht, Antreiben eines (N+1)-ten Motors des mindestens einen Motors durch eine Motorsteuereinheit (102);

wobei N eine natürliche Zahl ist und (N+1) nicht größer ist als eine Motornummer-Einstellzahl der Motornummer-Einstellungsanweisung.

14. Betriebsverfahren einer Vibrationsvorrichtung (5) nach einem der Ansprüche 9 bis 13, wobei eine Anzahl des mindestens einen Motors (51_1-51_n) eine Vielzahl ist und das Betriebsverfahren ferner umfasst:

Empfangen einer Motornummer-Einstellungsanweisung und einer Betriebsbefehls-Einstellungsanweisung;

Durchführen einer Bestimmung, ob eine Motornummer-Einstellzahl der Motornummer-Einstellungsanweisung in einem voreingestellten Zahlenbereich liegt;

wenn ein Ergebnis der Bestimmung positiv ist, Einstellen einer Betriebsnummer und einer Betriebsreihenfolge des mindestens einen Vibrationsmotors (51_1-51_n) gemäß der Motornummer-Einstellungsanweisung und der Betriebsbefehl-Einstellungsanweisung; und

wenn das Ergebnis der Bestimmung negativ ist, Warten auf eine weitere Motornummer-Einstellungsanweisung und Durchführen der Bestimmung mit der weiteren Motornummer-Einstellungsanweisung.

15. Betriebsverfahren nach einem der Ansprüche 9 bis 14, das ferner umfasst:

Empfangen einer Intensitäts-Einstellungsanweisung; und

Einstellen einer Intensität des mindestens einen Vibrationsmotors (51_1-51_n) gemäß der Intensitäts-Einstellungsanweisung.

## Revendications

1. Dispositif à vibrations (1, 10), comprenant :

   au moins un moteur à vibrations (11_1-11_n) ;
   une unité de commande de moteur (12, 102) raccordée à le au moins un moteur à vibrations (11_1-11_n) ;
   une unité d'entrée audio (13, 104) configurée pour obtenir un signal audio ;
   une unité de traitement de signal (14, 105) raccordée à l'unité d'entrée audio (13, 104) et à l'unité de commande de moteur (12, 102), et configurée pour effectuer un filtrage passe-bas sur le signal audio pour générer un signal filtré, effectuer une modulation d'amplitude sur le signal filtré selon une révolution nominale du au moins un moteur à vibrations (11_1-11_n) pour générer un signal modulé, et commander le au moins un moteur à vibrations (11_1-11_n) à travers l'unité de commande de moteur (12, 102) selon le signal modulé ; et
   une unité de réglage (103) raccordée à l'unité de traitement de signal (105), **caractérisée en ce que** l'unité de réglage (103) est configurée pour recevoir une instruction de réglage de battement comprenant un paramètre de vitesse et un paramètre de note ;
   dans lequel l'unité de traitement de signal (105) est en outre configurée pour calculer un temps de vibration en fonction du paramètre de vitesse et du paramètre de note, et commander le au moins un moteur à vibrations (11_1-11_n) à travers l'unité de commande de moteur (102) en fonction du temps de vibration ; et
   dans lequel l'unité de traitement de signal (105) est en outre configurée pour effectuer une première détermination du fait qu'une valeur du paramètre de vitesse se trouve dans une plage de vitesses prédéfinie et une seconde détermination du fait qu'une valeur du paramètre de note correspond à l'une d'une pluralité de valeurs de note prédéfinies sur l'instruction de réglage de battement avant de calculer le temps de vibration, dans lequel lorsqu'un résultat de la première détermination et qu'un résultat de la seconde détermination sont positifs, l'unité de traitement de signal (105) calcule le temps de vibration, et lorsque le résultat de la première détermination ou de la seconde détermination est négatif, l'unité de traitement de signal (105) attend une autre instruction de réglage de battement obtenue de l'unité de traitement de signal (105) et effectue la première détermination et la seconde détermination sur l'autre instruction de réglage de battement.

2. Dispositif à vibrations (1) selon la revendication 1, dans lequel le signal modulé comprend un paramètre d'amplitude et un paramètre de fréquence, le paramètre d'amplitude correspond à une amplitude du signal filtré, et le paramètre de fréquence correspond à la révolution nominale du au moins un moteur (11_1-11_n).

3. Dispositif à vibrations (1) selon la revendication 1 ou 2, dans lequel l'unité de traitement de signal (14, 105) prédéfinit 100 Hz comme fréquence de coupure du filtrage passe-bas.

4. Dispositif à vibrations (10) selon l'une des revendications 1 à 3, dans lequel l'unité de traitement de signal (105) comprend :

   un processeur audio raccordé à l'unité d'entrée audio, et configuré pour effectuer le filtrage passe-bas sur le signal audio pour générer le signal filtré et effectue la modulation d'amplitude sur le signal filtré selon une résolution nominale du moteur à vibrations pour générer le signal modulé ; et
   un microcontrôleur (1052) raccordé au processeur audio (1051) et à l'unité de commande de moteur (102), et configuré pour commander le au moins un moteur (11_1-11_n) à travers l'unité de commande de moteur (102) selon le signal modulé, ou pour calculer le temps de vibration selon le paramètre de vitesse et le paramètre de note et pour commander le au moins un moteur à vibrations (11_1-11_n) à travers l'unité de commande de moteur (102) selon le temps de vibration.

5. Dispositif à vibrations (10) selon l'une des revendications 1 à 4, dans lequel l'unité de traitement de signal (105) génère une première valeur en divisant une durée prédéfinie par le paramètre de vitesse, génère une seconde valeur en divisant une valeur du paramètre de note par une valeur de note prédéfinie, et divise la première valeur par la seconde valeur pour générer le temps de vibration.

6. Dispositif à vibrations (10) selon l'une des revendications 1 à **5,** dans lequel un nombre du au moins un moteur à vibrations (51_1-51_n) est multiple, l'unité de réglage (103) est en outre configurée pour recevoir une instruction de réglage du nombre de moteurs, l'unité de traitement de signal (105) est en outre configurée pour entraîner un Nième moteur du au moins un moteur à vibrations (51_1-51_n) à travers l'unité de commande de moteur (102), pour compter une durée de fonctionnement du Nième moteur, et entraîner un (N + 1) ième moteur du au moins un moteur à vibrations (51_1-51_n) à travers l'unité de commande de moteur (102) lorsque la durée de fonctionnement du Nième moteur atteint le temps de vibration, dans lequel N est un nombre naturel, et (N + 1) n'est pas supérieur à un nombre de réglage de moteur de l'instruction de réglage du nombre de moteurs.

7. Dispositif à vibrations (10) selon l'une des revendications 1 à 6, dans lequel un nombre du au moins un moteur à vibrations (51_1-51_n) est multiple, l'unité de réglage (103) est en outre configurée pour recevoir une instruction de réglage du nombre de moteurs et une instruction de réglage d'ordre de fonctionnement, l'unité de traitement de signal (105) est en outre configurée pour effectuer une détermination du fait qu'un nombre de réglage de moteur se trouve dans une plage de nombres prédéfinie sur l'instruction de réglage du nombre de moteurs, lorsqu'un résultat de la détermination est positif, l'unité de traitement de signal (105) règle un nombre de fonctionnement et un ordre du au moins un moteur à vibrations (51_1-51_n) à travers l'unité de commande de moteur (102) en fonction de l'instruction de réglage du nombre de moteurs et de l'instruction de réglage de l'ordre de fonctionnement, et lorsque le résultat de la détermination est négatif, l'unité de traitement de signal (105) attend une autre instruction de réglage du nombre de moteurs de la part de l'unité de réglage (103) et effectue la détermination sur l'autre instruction de réglage du nombre de moteurs.

8. Dispositif à vibrations (10) selon l'une des revendications 1 à 7, dans lequel l'unité de réglage (103) est en outre configurée pour recevoir une instruction de réglage d'intensité, et l'unité de traitement de signal (105) est en outre configurée pour régler une intensité du au moins un moteur à vibrations (51_1-51_n) à travers l'unité de commande de moteur (102) en fonction de l'instruction de réglage d'intensité.

9. Procédé de fonctionnement d'un dispositif à vibrations (1), comprenant les étapes consistant à :

recevoir un signal audio ;
effectuer un filtrage passe-bas sur le signal audio pour générer un signal filtré ;
effectuer une modulation sur le signal filtré selon une révolution nominale d'au moins un moteur à vibrations (11_1-11_n) pour générer un signal modulé ;
commander le au moins un moteur à vibrations (11_1-11_n) en fonction du signal modulé ;
recevoir une instruction de réglage de battement comprenant un paramètre de vitesse et un paramètre de note ;

calculer un temps de vibration selon le paramètre de vitesse et le paramètre de note ; et
commander au moins un moteur à vibrations (51_1-51_n) selon le temps de vibration ;
**caractérisé en ce que**, avant de calculer le temps de vibration, il comprend en outre les étapes consistant à :

effectuer une première détermination du fait qu'une valeur du paramètre de vitesse se trouve dans une plage de vitesses prédéfinie ;
effectuer une seconde détermination du fait qu'une valeur du paramètre de note correspond à l'une d'une pluralité de valeurs de note prédéfinies ; et
lorsqu'un résultat de la première détermination ou qu'un résultat de la seconde détermination est négatif, à attendre une autre instruction de réglage de battement et à effectuer la première détermination et la seconde détermination sur l'autre instruction de réglage de battement ;

dans lequel le calcul du temps de vibration est effectué lorsque le résultat de la première détermination et que le résultat de la seconde détermination sont positifs.

10. Procédé de fonctionnement selon la revendication 9, dans lequel le signal modulé comprend un paramètre d'amplitude et un paramètre de fréquence, le paramètre d'amplitude correspond à une amplitude du signal filtré, et le paramètre de fréquence correspond à la révolution nominale du au moins un moteur à vibrations (11_1-11_n).

11. Procédé de fonctionnement selon la revendication 9 ou 10, dans lequel une fréquence de coupure du filtrage passe-bas est prédéfinie à 100 Hz.

12. Procédé de fonctionnement selon la revendication 9, dans lequel un calcul du temps de vibration comprend les étapes consistant à :

diviser une durée prédéfinie par une valeur du paramètre de vitesse pour générer une première valeur ;
diviser une valeur du paramètre de note par une valeur de note prédéfinie pour générer une seconde valeur ; et
à diviser la première valeur par la seconde valeur pour générer le temps de vibration.

13. Procédé de fonctionnement selon la revendication 9 à 12, dans lequel un nombre du au moins un moteur à vibrations (51_1-51_n) est multiple, et le procédé de fonctionnement comprend en outre les étapes consistant à :

recevoir une instruction de réglage du nombre de moteurs ;

dans lequel une commande du au moins un moteur à vibrations (51_1-51_n) selon le temps de vibration comprend les étapes consistant à :

entraîner un Nième moteur du au moins un moteur à vibrations (51_1-51_n) ;

compter une durée de fonctionnement du Nième moteur ; et

lorsque la durée de fonctionnement du Nième moteur atteint le temps de vibration, à entraîner un (N + 1) ième moteur du au moins un moteur à travers une unité de commande de moteur (102) ;

dans lequel N est un nombre naturel, et (N + 1) n'est pas supérieur à un nombre de réglage de moteur de l'instruction de réglage du nombre de moteur.

14. Procédé de fonctionnement d'un dispositif à vibrations (5) selon l'une des revendications 9 à 13, dans lequel un nombre du au moins un moteur (51_1-51_n) est multiple, et le procédé de fonctionnement comprend en outre les étapes consistant à :

recevoir une instruction de réglage du nombre de moteurs et une instruction de réglage de l'ordre de fonctionnement ;

effectuer une détermination du fait qu'un nombre de réglage de moteur de l'instruction de réglage du nombre de moteurs se trouve dans une plage de nombres prédéfinie ;

lorsqu'un résultat de la détermination est positif, régler un nombre de fonctionnement et un ordre de fonctionnement du au moins un moteur à vibrations (51_1-51_n) selon l'instruction de réglage du nombre de moteurs et l'instruction de réglage de l'ordre de fonctionnement ; et

lorsque le résultat de la détermination est négatif, attendre une autre instruction de réglage du nombre de moteurs et effectuer la détermination sur l'autre instruction de réglage du nombre de moteurs.

15. Procédé de fonctionnement selon l'une des revendications 9 à 14, qui comprend en outre les étapes consistant à :

recevoir une instruction de réglage d'intensité ; et

à régler une intensité du au moins un moteur à vibrations (51_1-51_n) selon l'instruction de réglage d'intensité.

1

audio input unit — 13

signal processing unit — 14

— 12

motor control unit

— 11_1
— 11_2
— 11_n

vibration motor

vibration motor ● ● ● vibration motor

FIG. 1

obtaining an audio signal — S21

performing low pass filtering on the audio signal to generate a filtered signal — S22

performing a modulation on the filtered signal according to the rated revolution of the motors to generate a modulated signal — S23

controlling the motors according to the modulated signal. — S24

FIG. 2

FIG. 3a

FIG. 3b

FIG. 3c

FIG. 3d

5

setting unit —— 53

signal
processing unit —— 54

—— 52

motor control
unit

—— 51_1     —— 51_2     —— 51_n

vibration motor    vibration motor   • • •   vibration motor

FIG. 4

```
┌─────────────────────────────────────────┐
│                                         │ ⌐ S61
│    receiving a beat setting instruction │
│                                         │
└─────────────────────────────────────────┘
                    │
                    ▼
┌─────────────────────────────────────────┐
│   calculating vibration time according  │ ⌐ S62
│   to the speed parameter and the note   │
│              parameter                  │
└─────────────────────────────────────────┘
                    │
                    ▼
┌─────────────────────────────────────────┐
│    controlling the motor according to   │ ⌐ S63
│            the vibration time           │
└─────────────────────────────────────────┘
```

# FIG. 5

```
                    ┌─────┐
            ┌──────▶│ S61 │
            │       └─────┘
            │           │
            │           ▼
            │       ╱╲ determining         ⌐ S71
     no     │      ╱  ╲ whether the speed
   ─────────┤     ╱    ╲ parameter is in a
            │     ╲    ╱ preset speed range
            │      ╲  ╱
            │       ╲╱
            │        │ yes
            │        ▼
            │       ╱╲ determining          ⌐ S72
     no     │      ╱  ╲ whether the note
   ─────────┤     ╱    ╲ parameter matches
            │     ╲    ╱ one of a plurality
            │      ╲  ╱ of preset note values
            │       ╲╱
                     │ yes
                     ▼
                 ┌─────┐
                 │ S62 │
                 └─────┘
```

# FIG. 6

S81

receiving the motor number setting instruction, the operation order instruction and the intensity setting instruction

S82

determining whether the motor setting number is in a preset number range

no

yes

S83

setting an order of the Nth vibration motor

S84

determining whether N equals to the motor setting number

no

S85

N = N + 1

yes

S86

setting the intensity of the Nth vibration motor

S87

determining whether N equals to the motor setting number

no

S88

N = N + 1

yes

setting completed

FIG. 7

FIG. 8

10

104

audio input unit

103

setting unit

105

1051

audio processor

1052

microcontroller

102

motor control unit

101_1

vibration motor

101_3

vibration motor

● ● ●

101_n

vibration motor

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6027463 A